# EUROPÄISCHE PATENTSCHRIFT

(11) **EP 1 506 660 B1**
(45) Veröffentlichungstag und Bekanntmachung des Hinweises auf die Patenterteilung: **02.11.2006**
(21) Anmeldenummer: 03729873.4
(22) Anmeldetag: 08.05.2003
(51) Int. Cl.: H04L 29/06, H04L 12/14

(54) **VERFAHREN SOWIE FUNKKOMMUNIKATIONSGERÄT ZUR ÜBERTRAGUNGSEFFIZIENTEN AUFBEREITUNG VON MULTIMEDIANACHRICHTEN**
METHOD AND RADIO COMMUNICATION DEVICE FOR THE TRANSMISSION-EFFICIENT EDITING OF MULTIMEDIA NEWS
PROCEDE ET APPAREIL DE COMMUNICATION RADIO POUR PREPARER DES INFORMATIONS MULTIMEDIAS DE MANIERE EFFICACE POUR LEUR TRANSMISSION

(30) Priorität: 17.05.2002 DE 10222156
(43) Veröffentlichungstag der Anmeldung: 16.02.2005
(73) Patentinhaber: SIEMENS AKTIENGESELLSCHAFT, 80333 München (DE)
(72) Erfinder: TRAUBERG, Markus, 38159 Velchede (DE); SCHMIDT, Andreas, 38114 Braunschweig (DE); VAN NIEKERK, Sabine, 38228 Salzgitter (DE)
(86) Internationale Anmeldenummer: PCT/DE2003/001478
(87) Internationale Veröffentlichungsnummer: WO 2003/098894

(56) Entgegenhaltungen:
- WO-A-01/41391
- DE-A- 19 944 906
- US-A- 6 049 821
- US-A1- 2002 013 854

## Beschreibung

Verfahren sowie Funkkommunikationsgerät zur übertragungseffizienten Aufbereitung von Multimedianachrichten

Aus dem Dokument US 2002/0013854 A1 ist ein Verfahren und eine Vorrichtung bekannt, mit dem lediglich die Gesamtmenge an Kommunikationsdaten zwischen einem entfernten Kommunikationseinheit und einem Kommunikationsserver überwacht und kontrolliert werden kann.

Der Erfindung liegt die Aufgabe zugrunde, die Kostentransparenz für den Versender oder Empfänger einer zu übertragenden Multimedianachricht zu verbessern.

Diese Aufgabe wird durch folgendes erfindungsgemäße Verfahren gelöst:
Verfahren zur übertragungseffizienten Aufbereitung von Multimedianachrichten vor ihrem Versenden oder ihrem Empfangen, wobei vor, nach, und/oder während des Zusammenstellens der jeweilig zu versendenden oder zu empfangenden Multimedianachricht das vorhandene, belegte Nutzdatenvolumen dieser Multimedianachricht ermittelt wird, wobei das ursprünglich vorhandene, belegte Nutzdatenvolumen der jeweilig zu versendenden oder zu empfangenden Multimedianachricht (MM) einer Preisklasse eines nutzdatenvolumen-gestaffelten Tarifierungssystems zugeordnet wird, und wobei bei einer etwaigen Überschreitung einer vorgebbaren Preis- und/oder Nutzdatenvolumen-Obergrenze für die jeweilig zu versendende oder zu empfangende Multimedianachricht mindestens eine Reduzierungsapplikation für die Reduzierung des ursprünglich vorhandenen, belegten Nutzdatenvolumens der jeweilig zu versendenden oder zu empfangenden Multimedianachricht bereitgestellt wird, um die jeweilig zu versendende oder zu empfangende Multimedianachricht einer niedrigeren Preisklasse des nutzdatenvolumen-gestaffelten Tarifierungssystems zugehörig zu machen.
Dadurch wird in einfacher und zuverlässiger Weise eine verbesserte Kostentransparenz für den jeweiligen Absender oder Empfänger von Multimedianachrichten bereitgestellt, bevor die jeweilige Multimedianachricht tatsächlich vom Absender verschickt bzw. übermittelt oder vom Empfänger empfangen wird. Denn es wird mindestens eine Reduzierungsapplikation für die Reduzierung des ursprünglich vorhandenen Nutzdatenvolumens der jeweilig zu versendenden oder zu empfangenden Multimedianachricht bei Übersteigen einer vorgebbaren Preis- und/oder Nutzdatenvolumen-Obergrenze bereitgestellt. Wird diese Reduzierungsapplikation auf die jeweilig zu versendende oder zu empfangende Multimedianachricht beispielsweise durch entsprechende Auswahl durch den Versender angewandt, so kann deren vorhandenes, belegtes Nutzdatenvolumen verringert werden, so dass Übertragungskosten beim Übersenden oder Empfangen eingespart werden können.

Die Erfindung betrifft auch ein Funkkommunikationsgerät, insbesondere Mobilfunkgerät, das zur Durchführung des erfindungsgemäßen Verfahrens ausgebildet ist.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Figur 1: in schematischer Darstellung eine MMS-(Multimedia Messaging Service) Netzwerk-Architektur nach 3GPP zwischen einem Absender und einem Empfänger,
- Figur 2: in Gegenüberstellung ein lineares Tarifierungsmodell und ein gestaffeltes Tarifierungsmodell, wobei der Preis beim Abschicken der jeweiligen Multimedianachricht umso höher ist, je größer das Datenvolumen der Multimedianachricht ist,
- Figur 3: eine graphische Darstellung des zeitlichen Ablaufs eines vorteilhaften Ausführungsbeispiels des erfindungsgemäßen Verfahrens mit Hilfe von textuell beschriebenen Verfahrensschritten, und
- Figuren 4 mit 6: beispielhafte Ausgestaltungen der HMI-Einheit (HMI: "human machine interface" = Mensch/Maschine Schnittstelle) für ein mobiles Funkkommunikationsgerät bei der Durchführung verschiedener Varianten des erfindungsgemäßen Verfahrens.

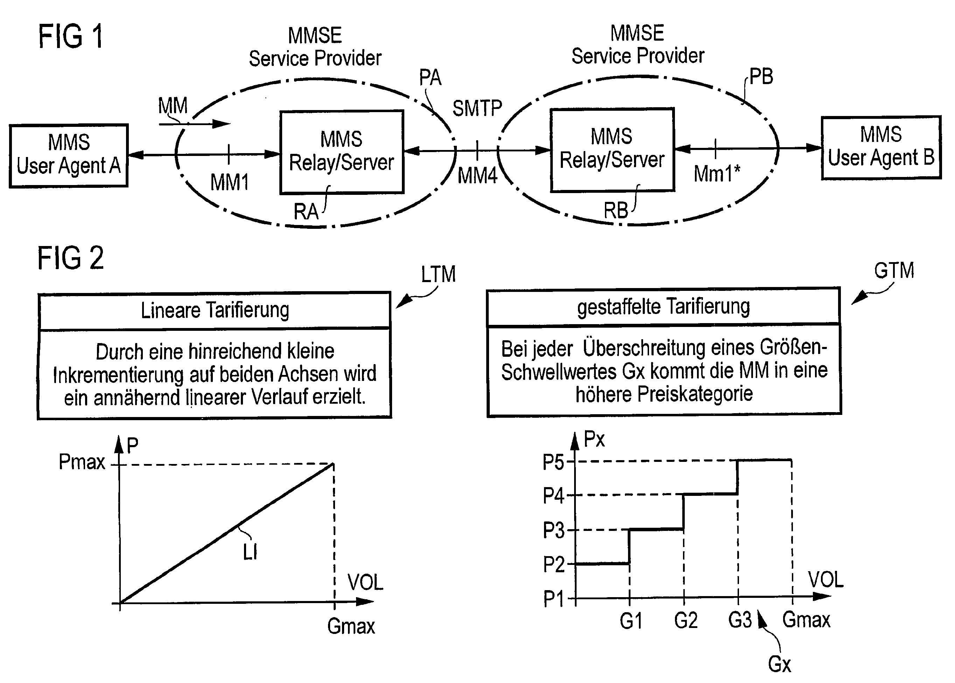

Elemente mit gleicher Funktion und Wirkungsweise sind in den Figuren 1 mit 6 jeweils mit denselben Bezugszeichen versehen.

Das Mobilfunksystem GSM (GSM - Global System for Mobile Communications) bietet neben der Sprachtelefonie auch die Möglichkeit, kurze Textnachrichten von bis zu 160 Zeichen Länge zu versenden bzw. zu empfangen. Dieser Dienst heißt in GSM Mobilfunksystemen insbesondere SMS (SMS - Short Message Service) (Literatur dazu: siehe insbesondere [1] am Ende der Beschreibung) .

Für Mobilfunksysteme der nächsten Generationen (2.5G und 3G), wie zum Beispiel UMTS (UMTS - Universal Mobile Telecommunications System), wird zur Zeit eine multimediafähige Variante eines mobilen Nachrichtendienstes standardisiert, der sogenannte MMS (Multimedia Messaging Service) (siehe insbesondere Literaturhinweise [2] und [3] am Ende der Beschreibung). Nachrichten mit multimedialen Inhalten werden im folgenden zur besseren Abgrenzung von den Textnachrichten des SMS nur noch kurz MMs (MMs - Multimedia Messages) genannt. Im Gegensatz zum SMS entfällt die Beschränkung auf reine Textinhalte. Beim MMS (Multimedia Messaging Service) können die Benutzer ihre Texte individuell formatieren, und/oder Audio- und/oder Videoinhalte sowie sonstige Kommunikationselemente in eine Nachricht einbetten. Eine Multimedianachricht kann demnach aus mehreren Multimedianachrichten-Elementen mit unterschiedlichen Dateitypen (z.B. Audio oder Standbild) und/oder Dateiformaten (bei Standbild z.B. GIF oder JPEG) zusammengesetzt sein.

In Figur 1 ist die MMS Netzwerk-Architektur nach heutigem Stand der Technik aus Sicht von 3GPP dargestellt. Dort wird beispielhaft eine Multimedianachricht MM von einem ersten sogenannten MMS User Agent bzw. Benutzeragent A zu einem zweiten MMS User Agent B unter Beteiligung jeweils eines sende- bzw. empfangsseitig zugeordneten MMS Relay/Server's RA bzw. RB übertragen. Im einzelnen ist in Übertragungsrichtung der Multimedianachricht MM betrachtet der Relay/Server RA dem U-ser Agent A netzwerkseitig nachgeordnet. Der Relay/Server RB ist dem zweiten, empfangsseitigen User Agent UB netzwerkseitig vorangestellt. Die jeweilige Schnittstellenverbindung zwischen dem User Agent A und dem sendeseitig zugeordneten MMS Relay/Server RA ist in der Figur 1 mit MM1 sowie zwischen dem User Agent B und dem empfangsseitig zugeordneten MMS Relay/Server RB mit MM1* bezeichnet. Als Protokoll auf der Schnittstelle MM4 zwischen den beiden Relay/Servern RA und RB ist SMTP (simple mail transfer protocol) gewählt. Unter dem jeweiligen MMS User Agent A bzw. B wird vorzugsweise eine Applikation bzw. Ablaufprozedur verstanden, die MMS realisiert. Diese Applikation ist insbesondere als Software-Programm auf dem jeweilig sendeseitig beteiligten Funkkommunikationsgerät, dessen sendeseitig zugeordnetem MMS Relay/Server, auf dem jeweilig empfangsseitig beteiligten Funkkommunikationsgerät und/oder auf dessen empfangsseitig zugeordnetem MMS Relay/Server implementiert. Dabei kann das jeweilige Funkkommunikationsgerät vorzugsweise als Mobilfunkgerät ausgebildet sein. Alternativ kann der jeweilige MMS User Agent auch in einem an ein Mobilfunkgerät angeschlossenen Gerät (z.B. Laptop, o.ä.) implementiert sein. Ein MMS Relay/Server ist ein Netzwerkelement, das im Zuständigkeitsbereich MMSE (MMSE - Multimedia Messaging Service Environment) des jeweiligen MMS Providers wie hier z.B. PA, PB den MMS User Agents A, B die MMS-Funktionalität zur Verfügung stellt.

MMS Provider bzw. Dienstanbieter können zum einen als Tarifierungsmodell für das neue Dienst-Angebot MMS vorsehen, dass dem Absender das Abschicken einer Multimedianachricht in Rechnung gestellt wird (Prinzip: "sending party pays", d.h. die jeweils sendende Partei zahlt). Zum anderen kann ggf. auch vorgesehen sein, dem Empfänger einer Multimedianachricht das Empfangen einer Benachrichtigung über das Vorliegen einer an ihn gerichteten Multimedianachricht auf dem empfangsseitig zugeordneten MMS Relay/Server und/oder das Herunterladen von ein oder mehreren Nachrichtenelementen dieser Multimedianachricht vom empfangsseitigen MMS Relay/Server zu vergebühren, d.h. in Rechnung zu stellen.

Für zukünftige MMS Provider der GSMA (GSMA - Global System for Mobile Communications Association, einer weltweiten Interessengemeinschaft von GSM-Mobilfunknetzbetreibern) könnte insbesondere ein Tarifierungsmodell für MMS von Interesse sein, das auf einem im folgenden mit "MM volume classes" bezeichneten Prinzip basiert. Die diesem Prinzip zu Grunde liegende Idee ist, dass die jeweilig zu übertragende oder zu empfangende Multimedianachricht zum Zwecke einer besseren Transparenz bei der Kostenabrechnung auf Basis ihres vorhandenen, belegten Nutzdatenvolumens bzw. ihrer Größe eine von mehreren vordefinierten Nutzdatenvolumenklassen - einer sogenannten "MM volume class" - zugeteilt wird, die einer bestimmten Preiskategorie bzw. Preisklasse zugeordnet ist (vergleiche dazu Figur 2, rechtes Diagramm GTM). Unter Nutzdatenvolumen bzw. Größe der jeweiligen Multimedianachricht wird dabei im Rahmen der Erfindung insbesondere die Gesamtsumme der bytes oder bits der Komponenten bzw. Nachrichtenelemente der jeweiligen Multimedianachricht verstanden. In der Praxis kann eine Einteilung der Nutzdatenvolumen-Dimension in MMS insbesondere in drei bis vier und damit überschaubare "MM volume classes" vorteilhaft sein. Im rechten Bildteil von Figur 2 ist ein Diagramm GTM für ein derart gestaffeltes Tarifsystem schematisch dargestellt. Entlang dessen Abszisse sind mehrere Schwellwerte G1 bis Gmax mit max=4 für das Nutzdatenvolumen VOL aufgetragen. Diesen Nutzdatenvolumen-Schwellwerten sind entlang der Ordinaten des Diagramms Preise bzw. Kostenwerte Px mit x=1 bis 5 zugeordnet. Zwischen je zwei benachbarten Schwellwerten wie z.B. G1, G2 ist die jeweils zugeordnete Preis- bzw. Kostenklasse wie z.B. P3 konstant. Insgesamt betrachtet ergibt sich somit ein Tarifsystem, dessen Preisklassen stufenweise mit zunehmender Nutzdatenvolumenklasse ansteigen. Bei Überschreiten des jeweiligen Datenvolumenschwellwerts wie z.B. G1 steigt also der Preis Px um einen bestimmten, vorgebbaren Preisbetrag an. Zum Beispiel steigt der Preis von P3 auf P4>P3 bei Überschreiten des Nutzdatenvolumen-Schwellwerts G2. Es ergibt sich somit insgesamt eine sukzessive von einem zum nächsten Nutzdatenvolumen-Schwellwert G1 mit G4 ansteigende Treppenkurve bzw. Balkenkurve für den zugehörigen Preis Px und damit eine Preisstaffelung in Abhängigkeit von Nutzdatenvolumen-Bereichen wie z.B. 0 bis G1, G1 bis G2, G2 bis G3, usw.. Bei jeder Überschreitung eines Datenvolumen- bzw. Größen-Schwellwerts der jeweilig zu übertragenden oder zu empfangenden Multimedianachricht kommt die Multimedianachricht hinsichtlich ihrer Übertragungskosten von ihrer bisherigen Preisstufe Px in eine nächst höhere Preisstufe Px+1. Falls insbesondere jeweils ein konstanter Preisanhebungsbetrag für jede Schwellenüberschreitung gewählt ist, so steigt die Treppenkurve in erster Näherung linear an.

Nachteilig bei diesem Ansatz ist, dass durch jede Überschreitung (und sei sie auch noch so klein) eines Nutzdaten-Schwellwertes Gx (mit x= 1 bis max, wobei max die maximale Anzahl von definierten Schwellwerten bezeichnet) in der Nutzdatenvolumen-Dimension VOL die jeweilige Multimedianachricht in eine höhere Preis-Kategorie Px (x=1 bis max; hier in Figur 2 ist z.B. max=5) gehoben wird. Dabei kann schon ein einzelnes, zusätzliches bit oder Byte ausschlaggebend sein, ob eine Multimedianachricht einer niedrigeren oder höheren Preiskategorie Px angehört. Allgemein gilt: je geringer die Anzahl der Schwellwerte Gx in der Nutzdatenvolumen-Dimension VOL ist, desto höher ist die Wahrscheinlichkeit, dass der Absender oder Empfänger einer Multimedianachricht das durch die aktuelle Preis-Kategorie der Multimedianachricht vorgegebene maximale Nutzdatenvolumen VOL der jeweiligen Stufe nicht optimal, d.h. nur unvollständig ausnutzt bzw. belegt (siehe Figur 2, rechte Abbildung) und somit mitbezahlte Übertragungskapazität verschenkt. Mit einer wachsenden Anzahl von Schwellwerten Gx in der Nutzdatenvolumen-Dimension und von zugeordneten Preiskategorien könnte man sich einem linearen Verlauf der zugeordneten Preise P annähern, wie er in der linken Bildhälfte von Figur 2 im Diagramm LTM schematisch dargestellt ist. Dort steigt der Preis P kontinuierlich sowie linear mit dem Nutzdatenvolumen der jeweilig zu übertragenden Multimedianachricht an. Dem maximalen Nutzdatenvolumen Gmax ist dabei der maximale Preis Pmax zugeordnet. Es wird also durch eine hinreichend kleine Inkrementierung von Nutzdatenvolumen-Schwellwertbereichen Gx-G(x-1) und zugehörigen Preiskategorien Px auf beiden Achsen des Diagramms GTM in der rechten Bildhälfte von Figur 2 annähernd der lineare Verlauf LI des Diagramms LTM von Figur 2 zwischen dem Nutzdatenvolumen VOL und zugeordnetem Preis P erzielt. Allerdings steht dieses lineare Tarifsystem im Widerspruch zu den wirtschaftlichen Interessen der zukünftigen MMS Provider. Zudem ist eine derartig kontinierliche Preis-/Nutzdatenvolumen-Zuordnung für die Abrechnung seitens des jeweiligen Providers zu aufwendig und für den jeweiligen Benutzer zu unübersichtlich.

Das Diagramm LTM in der linken Bildhälfte von Figur 2 veranschaulicht also ein idealisiertes, lineares Tarifierungsmodell, während das Diagramm GTM in der rechten Bildhälfte ein gestaffeltes Tarifierungmodell für die Praxis zeigt. In beiden Fällen ist der Preis beim Abschicken einer Multimedianachricht umso höher, je größer das vorhandene, belegte Datenvolumen VOL der jeweilig zu übersendenden oder zu empfangenden Multimedianachricht ist.

Im folgenden werden beispielhaft für den Versendefall einer Multimedianachricht verschiedene, vorteilhafte Möglichkeiten beschrieben, wie dem Benutzer eines MMS- fähigen Kommunikationsendgerätes, vorzugsweise Funkkommunikationsgeräts, über dessen sogenannte HMI-Einheit (HMI - Human Machine Interface) diverse Entscheidungshilfen unterbreitet werden können, um die Multimedianachricht möglichst datenvolumeneffizient und damit auch kostengünstig versenden zu können. Ferner wird dabei auf ein vorteilhaftes Verfahren zum Optimieren des ursprünglich vorhandenen Nutzdatenvolumens einer zu versendenden Multimedianachricht vor deren Abschicken bei Tarifmodellen nach dem Prinzip der erläuterten "MM volume classes" eingegangen. Diese Verfahrensschritte für den Versendefall sind dabei in entsprechender Weise auf den Empfangsfall übertragbar, bei dem ein Funkkommunikationsgerät unter Zuhilfenahme seines MMS User Agent die Benachrichtigung über die Abholbereitschaft einer Multimedianachricht oder ein oder mehrere Elemente dieser auf dem empfangsseitigen MMS Relay/Server bereitliegenden Multimedianachricht empfängt. Als jeweilig beteiligtes Funkkommunikationsgerät ist insbesondere eine Mobilstation bzw. ein Mobilfunkgerät verwendet.

Unabhängig von dem letztendlich gewählten Tarifierungsmodell (linear oder gestaffelt) ist es für den Absender einer Multimedianachricht wie z.B. MM immer zweckmäßig, vor, während und/oder nach dem Zusammenstellen dieser Multimedianachricht auf seinem Endgerät abschätzen zu können, was ihn der Versand dieser Multimedianachricht kosten wird. Dies gilt insbesondere für Tarifierungsmodelle auf Basis der "MM volume classes". Denn insbesondere hier kann es kritisch sein, dass der Absender der jeweiligen Multimedianachricht wie z.B. MM das Nutzdatenvolumen VOL der aktuell, d.h. ursprünglich zugeordneten Preis-Kategorie Px nicht optimal ausnutzt, d.h. einen freigebliebenen Restteil des mit der verrechneten Preiskategorie verknüpften bzw. korrespondierenden Datenvolumens VOL verschenkt. Dieses mitbezahlte Freivolumen ist durch die Differenz zwischen dem tatsächlichen, aktuell vorhandenen Datenvolumen der jeweilig zu übertragenden Multimedianachricht und demjenigen Datenvolumen-Schwellwert gebildet, der die dem vorhandenen Datenvolumen zugeordnete und verrechnete Preiskategorie Px zur nächst höheren Preiskategorie Px+1 begrenzt.

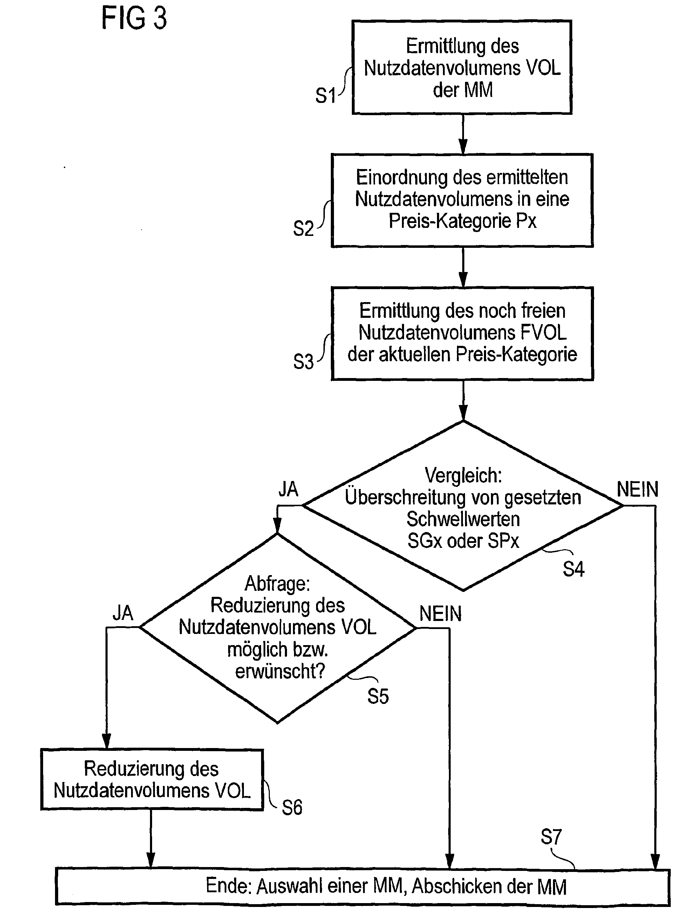

Gemäß einer vorteilhaften Variante des erfindungsgemäßen Verfahrens ist eine Schrittabfolge zweckmäßig (siehe Figur 3), die während bzw. nach dem Zusammenstellen der jeweiligen Multimedianachricht folgende, zeitlich aufeinanderfolgende Einzelschritte umfasst:
a) das ursprünglich vorhandene, belegte Nutzdatenvolumen VOL der jeweilig vorliegenden, zu versendenden Multimedianachricht wie z.B. MM wird ermittelt;
b) das ermittelte Nutzdatenvolumen VOL der zu versendenden-Multimedianachricht wird einer korrespondierenden Preis-Klasse bzw. Preiskategorie Px zuordnet;
c) das noch freie Nutzdatenvolumen FVOL für die aktuell vorliegende Preis-Klasse Px wird berechnet, die dem ursprünglich vorhandenen, belegten Nutzdatenvolumen der zu verschickenden Multimedianachricht aufgrund des jeweilig vorgegebenen Tarifsystems zugeordnet ist; dazu wird die Differenz zwischen dem der nächsthöheren Preisklasse Px+1 zugeordnetem Nutzdatenvolumen Gx+1 des vorgegebenen Tarifsystems und dem aktuell vorhandenen Nutzdatenvolumen VOL der Multimedianachricht gebildet;
d) es werden eventuelle Überschreitungen von benutzerdefinierten Preis- und/oder Nutzdatenvolumen- Obergrenzen ermittelt und ggf. der Benutzer darauf aufmerksam gemacht;
e) die Ergebnisse der Ermittlung nach a), und/oder der Zuordnung nach b), und/oder der Berechnung nach c), und/oder der eventuellen Überschreitung nach d) werden dem Benutzer, in akustischer, taktiler und/oder graphischer Form angezeigt;
f) dem Benutzer werden ein oder mehrere Vorschläge zur Reduktion bzw. Verringerung des ursprünglich vorhandenen Nutzdatenvolumens der zu versendeden Multimedianachricht unterbreitet, vorrangig mit dem Ziel, diese Multimedianachricht einer niedrigeren Preis-Kategorie des vorgegebenen Tarifsystems zugehörig zu machen; und
g) eine Reduktion des Nutzdatenvolumens der zu versendenden Multimedianachricht wird ausführt, ebenfalls daraufhin abzielend, diese Multimedianachricht einer niedrigeren Preiskategorie des vorgegebenen Tarifsystems zugehörig zu machen.

Vorteilhaft ist eine Ausführungsvariante, bei der alle Verfahrensschritte a) bis g) direkt im jeweils sendenden MMS U-ser Agent ausgeführt werden. Alternativ dazu ist jedoch auch eine Ausführungsvariante zweckmäßig, bei der die Verfahrensschritte a) bis g) von mindestens einer eigenständigen, d.h. vom MMS User Agent unabhängigen Funktionseinheit ausgeführt werden. Ggf. kann es in beiden Fällen vorteilhaft sein, lediglich eine Teilmenge der Verfahrensschritte a) bis g) durchzuführen. Beispielsweise sind die Ermittlung der zum belegten Nutzdatenvolumen zugehörigen aktuellen Preis-Klasse der zu versendenden Multimedianachricht, das Berechnen des noch freien Nutzdatenvolumens für die ermittelte, aktuelle Preis-Kategorie und die Anzeige all dieser Informationen, sowie das Melden eventuell aufgetretener Überschreitungen von benutzerdefinierten Preis- und/oder Nutzdatenvolumen-Obergrenzen als Basisschritte vorteilhaft.

Bei Verfahrensschritten, die von einer eigenständigen Funktionseinheit ausgeführt werden, werden dieser zweckmäßigerweise vom MMS User Agent - je nach Funktion bzw. Aufgabe der entsprechenden Funktionseinheit - bestimmte Informationen zur Verfügung gestellt, beispielsweise das vom MMS User Agent ermittelte, belegte Nutzdatenvolumen der jeweilig zu versendenden Multimedianachricht oder die ganz oder teilweise für den Versand fertig zusammengestellte Multimedianachricht selbst.

In beiden Fällen (alle Verfahrensschritte werden direkt im MMS User Agent (siehe A in Figur 1) der absendenden Kommunikationseinheit ausgeführt bzw. einzelne oder alle Verfahrensschritte werden von mindestens einer eigenständigen Funktionseinheit ausgeführt) hat zweckmäßigerweise entweder der MMS User Agent oder die mindestens eine eigenständige Funktionseinheit Zugriff auf bestimmte Informationen eines vorgegebenen Tarifsystems, beispielsweise auf eine Tarif-/Nutzdatentabelle wie z.B. GTM in Figur 2, um das ermittelte Nutzdatenvolumen der jeweilig zu versendenden Multimedianachricht einer Preis-Klasse zuordnen zu können, und/oder auf die vom Benutzer gesetzten Preis- und/oder Nutzdatenvolumen-Obergrenzen, um auf eventuelle Überschreitungen hinweisen zu können.

Derartige Informationen können entweder in internen Speicherbereichen des jeweiligen Kommunikations-Endgerätes oder in externen Speichereinheiten abgelegt sein, die mit dem Endgerät über Kabel, elektrische Kontakte oder drahtlos verbunden werden können.

Eine besonders vorteilhafte Ausgestaltung für das Speichern der Daten auf einer externen Speichereinheit liegt vor, wenn es sich bei der externen Speichereinheit um eine intelligente Speicherkarte (eine sogenannten Smartcard), beispielsweise eine SIM (subscriber identy module) -Karte oder eine UICC - Karte mit (U)SIM handelt, die in das mobile Endgerät gesteckt wird. Auf diesen Karten gibt es nämlich Speicherbereiche, die ausschließlich vom Netzbetreiber beschrieben bzw. aktualisiert werden können, und solche, für die auch der Benutzer Schreib- und Leserechte besitzt. Die Erstgenannten eignen sich besonders gut für das Speichern und nachträgliche OTA-Aktualisieren (OTA = _{"}over the air") der individuellen MMS Tarifinformationen des jeweiligen MMS Providers beispielsweise auf Basis des Prinzips der "MM volume classes". Die letzteren Speicherbereiche sind für das Speichern von benutzerdefinierten Preis- und/oder Nutzdatenvolumen-Obergrenzen geeignet. Diese Ausführungsvariante, bei der Tarifinformationen des Netzbetreibers auf der SIM -Karte bzw. auf der UICC-Karte mit (U)SIM abgelegt sind, ist vorteilhaft, weil durch die Möglichkeit der OTA-Aktualisierungen immer die neuesten Tarife für die oben beschriebenen Berechnungen bzw. Vergleiche herangezogen werden können.

Eine vorteilhafte Ausgestaltung für die Ausführung einzelner oder mehrerer der obigen Verfahrenschritte in einer vom jeweiligen MMS User Agent unabhängigen Funktionseinheit liegt dann vor, wenn auch die das Datenvolumen der jeweiligen Multimedianachricht reduzierende Applikation auf der SIM-Karte (SAT Applikation) oder UICC mit (U)SIM (CAT bzw. (U)SAT Applikation) abläuft.

Weiterhin ist auch eine Aktualisierung der auf dem jeweiligen Endgerät oder auf der externen Speichereinheit (z.B. SIM-Karte oder UICC mit (U)SIM) gespeicherten Tarifinformationen durch Nutzung einer allgemeinen Datenverbindung zwischen Endgerät und einem Server im Funknetz über die Luftschnittstelle möglich. Diese Aktion kann wahlweise durch die Funktionseinheit auf dem jeweiligen Endgerät ("Pull") oder durch den Server im Netzwerk ("Push"-Dienst) eingeleitet werden.

Die oben bereits kurz erwähnten, einzelnen Verfahrensschritte a) bis g) werden nachfolgend anhand von Figur 3 im Detail erläutert:
Zunächst wird eine Multimedianachricht wie z.B. MM im MMS U-ser Agent wie z.B. A in Figur 1 des Funkkommunikationsgerät des Absenders zum Versenden zusammengestellt. Eine solche Multimedianachricht setzt sich dabei prinzipiell aus einem Kopfteil ("header"), in dem vorwiegend Informationen zur Übertragung bzw. Verwaltung der Multimedianachricht enthalten sind, und einem sogenannten Körper ("body part") zusammen, der mehrere Multimedia-Nachrichtenelemente (d.h. die eigentlichen Nutzdaten) aufweisen kann, wobei die Verwendung unterschiedlicher Dateitypen und Dateiformate wie eingangs erläutert möglich ist.
Das Nutzdatenvolumen VOL einer Multimedianachricht wie z.B. MM (Schritt S1 in Figur 3) ermittelt bzw. berechnet sich beispielsweise durch das Aufsummieren aller Datenvolumina der einzelnen MM-Elemente, sowie der Größe des Kopffeldes mit dem Namen "Subject" für das Thema der Multimedianachricht. Zweckmäßig kann es auch sein, dass die Längen bzw. Größen der Kopffelder zur Adressierung der Multimedianachricht (wie beispielsweise "Cc" und "Bcc"), sowie eventuell in der Multimedianachricht enthaltene Präsentationsbeschreibungen (beispielsweise eine SMIL Präsentation (SMIL - Synchronized Multimedia Integration Language; siehe [4]) zum Nutzdatenvolumen der zu versendenden Multimedianachricht hinzugerechnet werden.
Ist das aktuell vorhandene Nutzdatenvolumen VOL der zu versendenden Multimedianachricht MM entsprechend Schritt S1 von Figur 3 ermittelt worden und somit bekannt, so kann nun auf einfache Weise - beispielsweise anhand einer abgespeicherten Tariftabelle wie z.B. GTM von Figur 2 - die zugehörige Preis-Kategorie ermittelt werden (siehe Schritt S2 in Figur 3). Ebenso kann das noch freie, d.h. ungenutzte Nutzdatenvolumen FVOL für die Preisklasse berechnet werden, die dem ursprünglich vorhandenen Nutzdatenvolumen aufgrund der Tariftabelle zugeordnet ist. Das freie Nutzdatenvolumen FVOL entspricht dann der Anzahl der Bytes, die maximal ergänzt werden können, bis die Multimedianachricht MM einer höheren Preiskategorie angehört (siehe Schritt S3 in Figur 3). Danach werden in vorteilhafterweise das ermittelte Nutzdatenvolumen VOL und/oder die zugeordnete Preisklasse Px mit zuvor definierten, d.h. festlegbaren bzw. vorgebbaren Nutzdatenvolumen- und/oder Preis-Obergrenzen SGx, SPx verglichen (siehe Schritt S4 in Figur 3). Falls eine dieser gesetzten Obergrenzen überschritten wird, wird die Multimedianachricht MM vorzugsweise automatisch daraufhin untersucht, ob und wie eine Reduzierung der Nutzdaten möglich ist. Idealerweise wird dazu jedes Multimedia -Nachrichtenelement einzeln betrachtet. Dabei können die vorab definierten Nutzdatenvolumen- und/oder Preisobergrenzen
   a) vom jeweiligen Nutzer, und/oder
   b) vom jeweiligen MMS Provider
festgelegt worden sein.

Die folgenden Beispiele beschreiben unterschiedliche, vorteilhafte Möglichkeiten zum Reduzieren des Datenvolumens einer Datei:
a) Datei-Typ Konvertierung (z.B. Konvertierung einer Datei vom Typ Film in mehrere Dateien des Typs Standbild, um aus einer Bildsequenz mehrere sogenannte "snapshots" (Schnappschüsse) anzufertigen);
b) Datei-Format Konvertierung (z.B. bei Dateien vom Typ Standbild: Kompression von BMP in JPG, bei Dateien vom Typ Audio: Kompression von WAV in MP3); bei Standbildern ist beispielsweise auch die Reduzierung der Farbtiefe und/oder der Größe möglich.
c) Neben den hier explizit aufgelisteten Möglichkeiten existieren auch noch weitere Datenkompressionsverfahren. Ferner besteht die Möglichkeit, mehrere Konvertierungstechniken miteinander zu kombinieren (z.B: zuerst Größe eines Bildes ändern, danach Datei-Format Konvertierung durchführen).

Die erwähnten Kompressionstechniken stellen eine Teilmenge der Datei-Format Konvertierungen dar und haben vorrangig das Ziel, die Größe einer Datei zu reduzieren. Mit manchen dieser Techniken erreicht man insbesondere ein Kompressions-Verhältnis von 10:1, teilweise sogar deutlich mehr.

Anschließend (gegebenenfalls nach Rückfrage beim jeweiligen Absender und ggf. nach Bestätigung durch den Absender) wird zweckmäßigerweise das Nutzdatenvolumen VOL der jeweilig untersuchten Multimedianachricht, wie hier MM, reduziert (siehe Schritt S5 in Figur 3), indem die Größe mindestens eines Multimedianachrichten-Elements (beispielsweise durch Konvertierung/Kompression) reduziert wird und mindestens eine neue, kleinere Multimedianachricht bestehend aus mindestens einem modifizierten Multimedianachrichten-Element zusammengestellt wird (siehe Schritt S6 in Figur 3). Die so modifizierte Multimedianachricht mit ein oder mehreren bezüglich des Nutzdatenvolumens reduzierten Nachrichtenelementen wird dem Absender dann in vorteilhafter Weise alternativ zum Versand angeboten (siehe Schritt S7 in Figur 3).

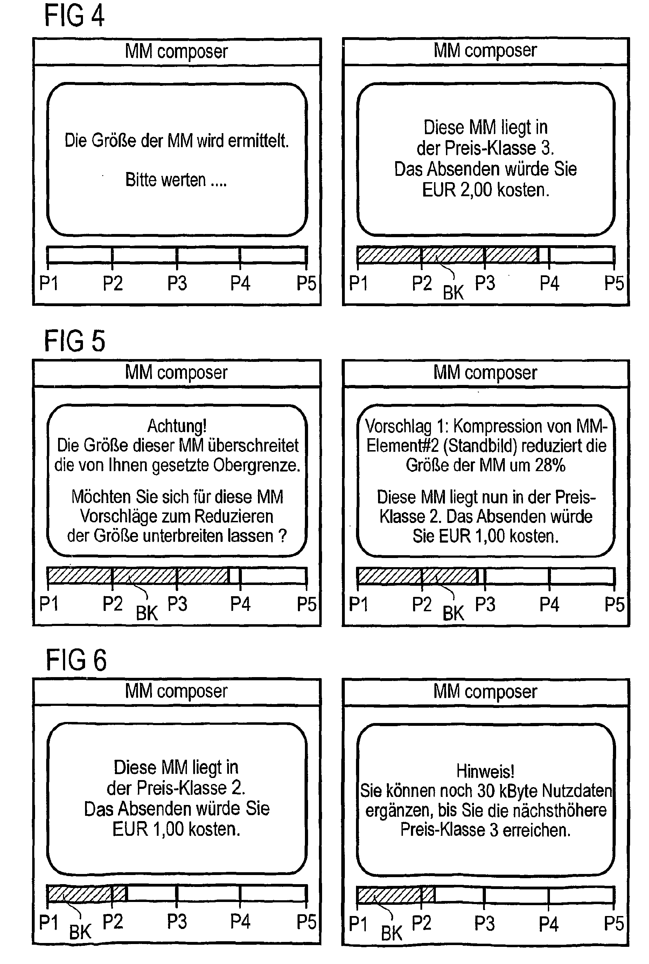

Nach jedem einzelnen dieser zeitlich aufeinanderfolgenden Schritte S1 mit S7 kann optional eine Ausgabemeldung über das HMI an den Benutzer erfolgen. Für die Ausgabe des ermittelten Nutzdatenvolumens VOL der jeweilig zu versendenden Multimedianachricht wie z.B. MM, der diesem Nutzdatenvolumen zugeordneten Preis-Kategorie Px, des bisher ungenutzten (d.h. noch freien) Nutzdatenvolumens FVOL in der aktuellen Preis-Kategorie und/oder der Meldung eventueller Überschreitungen von benutzerdefinierten Preis- und/oder Nutzdatenvolumen-Obergrenzen SGx, SPx durch das HMI (HMI - Human Machine Interface) des jeweilig beteiligten Funkkommunikationsgeräts eignet sich vorzugsweise eine Anzeige in Form einer Balkengraphik. Eine solche Balkengraphik ist jeweils zu den Ausführungsbeispielen in den Figuren 4 bis 6 dargestellt und mit BK bezeichnet.

In den beiden nun folgenden Beispielen möchte der Absender eine Multimedianachricht MM versenden, die z.B. zwei Multimedianachrichten-Elemente wie beispielsweise ein Textelement und ein Standbild aufweist.

### Beispiel 1:

Annahmen:
- Um Geld zu sparen, möchte der Benutzer maximal, d.h. höchstenfalls, Multimedianachrichten der Preis-Kategorie P2 verschicken.
- Die benutzerdefinierte Preis-Obergrenze SPx = P3 wird beim Zusammenstellen der Multimedianachricht MM überschritten.
- Der Benutzer kann sich Vorschläge für die Reduzierung des vorliegenden Nutzdatenvolumens VOL seiner Multimedianachricht MM unterbreiten lassen.

Der Benutzer stellt die Multimedianachricht MM bestehend aus zwei Multimedianachrichten-Elementen (abgekürzt: MM-Elementen) nach seinen individuellen Vorstellungen mit Hilfe einer Prozedur "MM composer", d.h. Multimediazusammensteller, zusammen. Das erste MM-Element ist vom Typ Text; das zweite ist ein Standbild im Format BMP. Anschließend lässt sich der Absender das Nutzdatenvolumen seiner Multimedianachricht MM und die zugehörige Preiskategorie berechnen (siehe Figur 4, links). Das Ergebnis zeigt, daß die Multimedianachricht MM den vom Benutzer definierten Schwellwert SPx = P3 überschreitet (siehe Figur 4, rechts). Figur 4 veranschaulicht also eine beispielhafte Ausgestaltung des HMI (Teil 1), bei der in der linken Abbildung eine Meldung bei der Bestimmung des (Nutz-) Datenvolumens VOL der zu übermittelnden Multimedianachricht, in der rechten Abbildung von Figur 4 eine Ausgabe der aufgrund der vorgegebnen Tariftabelle zugeordneten Preis-Kategorie Px angezeigt wird. Es wird also aufgrund des vorgegebenen Tarifsystems wie z.B. entsprechend GTM in Figur 2 des Providers ermittelt, welche Preisklasse dem aktuell vorhandenen Nutzdatenvolumen der Multimedianachricht entspricht.

Der Absender wird durch das HMI des Absender - Kommunikationsgeräts über diese Tatsache in Kenntnis gesetzt und gefragt, ob er sich alternative Vorschläge für die vorliegende, abzusendende Multimedianachricht MM unterbreiten lassen möchte (Figur 5, linkes Anzeigebild). Für die hier betrachtete Multimedianachricht MM bestehend aus einem Text und einem unkomprimierten Standbild bietet sich für das Erzeugen eines alternativen Vorschlags die Kompression des zweiten MM-Elementes an (z.B. von BMP in JPG). Figur 5, rechtes Anzeigebild zeigt dazu eine mögliche Ausgabe des HMI's des Endgerätes. Der Absender sieht beispielsweise anhand der Balkengraphik BK sofort, dass die alternative Multimedianachricht MM innerhalb der gewünschten Preisklasse P2 liegt: der gesetzte bzw. gewählte Schwellwert SPx = P3 wird nicht mehr überschritten. Nun hat der Absender die Möglichkeit, die vom MMS User Agent A erfindungsgemäß modifizierte Multimedianachricht MM mit unverändertem Informationsgehalt zu günstigeren Konditionen abzuschicken als diejenige, die er anfangs selbst zusammengestellt hat. Figur 5 veranschaulicht also eine beispielhafte Ausgestaltung des HMI (Teil 2), bei der links ein Hinweis, dass die MM eine benutzerdefinierte Schwelle überschreitet, und rechts eine Ausgabe der Preisklasse der MM mit reduziertem (Nutz-)Datenvolumen angezeigt wird.

### Beispiel 2

Annahmen:
- Um Geld zu sparen, möchte der Benutzer maximal Multimedianachrichten der Preis-Kategorie P2 verschicken.
- Die jeweilige Multimedianachricht MM liegt in der Preis-Kategorie P2, allerdings wird die benutzerdefinierte Preis-Obergrenze SPx = P2 deutlich unterschritten.
- Der Benutzer wird auf das bisher noch ungenutzte Nutzdatenvolumen FVOL innerhalb der aktuellen Preis-Kategorie P2 hingewiesen.

Der Benutzer stellt eine Multimedianachricht wie z.B. MM zusammen, wobei das erste MM-Element aus einer Datei vom Typ Text bestehen soll. Da sich der Absender unsicher ist, welchen Umfang seine Multimedianachricht durch den Text bereits angenommen hat (mit anderen Worten: ob er noch unterhalb eines definierten Schwellwerts P3 liegt), lässt er zunächst das aktuell vorhandene Nutzdatenvolumen VOL seiner Multimedianachricht und die zugehörige Preiskategorie ermitteln bzw. berechnen. Das Ergebnis der Berechnung wird dem Benutzer beispielsweise mittels einer Balkengraphik BK angezeigt. Hier sieht der Absender sofort, dass die untersuchte Multimedianachricht innerhalb der gewünschten Preisklasse liegt: der Preisklassen-Schwellwert P3 wird noch nicht überschritten (siehe Figur 6, links). Ferner wird der Absender über das noch freie Nutzdatenvolumen FVOL informiert und kann ruhigen Gewissens noch ein zweites MM-Element (beispielsweise hier ein Standbild von 30 kByte Größe) in die Multimedianachricht integrieren (Figur 6, rechts). Figur 6 veranschaulicht also eine beispielhafte Ausgestaltung des HMI (Teil 3), bei der links die Ausgabe der ermittelten Preis-Kategorie, und rechts der Hinweis angezeigt wird, dass das Nutzdatenvolumen der aktuell zugeordneten Preiskategorie noch nicht vollständig genutzt wird.

Zusammenfassend betrachtet lässt sich somit eine optimierte Aufbereitung der jeweilig zu übertragenden Multimedianachricht in vorteilhafter Weise auf folgende Arten erreichen: Ausreichend für eine erste Verbesserung kann es sein, vor dem Versenden der jeweiligen Multimedianachricht, nach und/oder während des Zusammenstellens der jeweiligen Multimedianachricht das Nutzdatenvolumen VOL dieser Multimedianachricht zu ermitteln. Bei einer etwaigen Überschreitung einer vorgebbaren Nutzdatenvolumen-Obergrenze wie z.B. SGx oder Überschreitung einer vorgebbaren Preis-Obergrenze wie z.B. SPx wird dann mindestens eine Reduzierungsapplikation des Nutzdatenvolumens der Multimedianachricht bereitgestellt. Auf das Überschreiten der jeweiligen Obergrenze wird dabei der jeweilige Benutzer zweckmäßigerweise aufmerksam gemacht. Zweckmäßigerweise werden ihm dann auch verschiedene Möglichkeiten zur Reduzierung des Nutzdatenvolumens der jeweilig zu versendenden Multimedianachricht über das HMI seines Kommunikationsgeräts zur Auswahl und Durchführung angeboten.

In analoger Weise kann zusätzlich oder unabhängig hiervon ggf. auch bei einer zu empfangenden Multimedianachricht verfahren werden.

Auf diese Weise ist das beschriebene Verfahren (unabhängig vom letztendlich gewählten Tarifierungsmodell für MMS) vorteilhaft, weil es den jeweiligen Absender oder Empfänger einer Multimedianachricht zuverlässig darüber informieren kann, wie groß eine auf dem jeweiligen Funkkommunikations-Endgerät zusammengestellte Multimedianachricht ist, d.h. welches Nutzdatenvolumen VOL sie aktuell hat. Dies kann beispielsweise durch Angabe der Gesamtsumme der bytes oder bits der Komponenten der jeweiligen Multimedianachricht charakterisiert werden.

Wenn für den MMS - Dienst Tarifierungsmodelle nach dem nichtlinearen Prinzip der "MM volume classes" (siehe Diagramm GTM in Figur 2, rechte Abbildung) eingeführt werden, kommen noch weitere Vorteile hinzu: Der Absender oder Empfänger einer Multimedianachricht wird zuverlässig darüber informiert, in welcher zugeordneten Preis-Kategorie sich eine zu versendende oder zu empfangende Multimedianachricht bezüglich ihres ursprünglich Nutzdatenvolumens befindet, und ob die aktuelle Preis-Kategorie dieser Multimedianachricht optimal ausgenutzt wird. Das heißt, es wird ermittelt, wieviele Nutzdaten FVOL innerhalb der zum aktuell vorhandenen Nutzdatenvolumen aufgrund des gegebenen Tarifsystems zugeordneten Preis-Klasse noch ergänzt werden können, da sie bisher unbelegt sind, bis die Multimedianachricht der nächst höheren Preis-Kategorie des Tarifsystems zugeordnet ist. Außerdem kann der Absender einer Multimedianachricht immer dann gewarnt werden, wenn von ihm selbst oder vom MMS Dienstleistungsanbieter (MMS Provider) gesetzte Schwellwerte wie z.B. Preiskategorie-Schwellwerte SPx, und/oder Nutzdatenvolumen-Schwellwerte SGx überschritten werden (siehe Figur 3).

Es wird somit ein vorteilhaftes Verfahren bereitgestellt, das dem Absender oder Empfänger einer zu versendenden oder zu empfangenden Multimedianachricht viele Hilfestellungen für das Abschätzen des Nutzdatenvolumens dieser Multimedianachricht und implizit auch für die entstehenden Kosten bietet.

Insbesondere bei der geplanten Tarifierung des MMS nach dem Prinzip der "MM volume classes" entsprechend dem Prinzip von Figur 2, rechter Teil kann ein automatisches Angleichen des Nutzdatenvolumens einer Multimedianachricht auf der Basis benutzerdefinierter Grenzwerte daraufhin abzielend durchgeführt werden, die Multimedianachricht einer niedrigeren Preis-Kategorie zugehörig zu machen und somit Kosten für das Abschicken einer Multimedianachricht zu sparen.

Dabei wird das ermittelte Nutzdatenvolumen VOL der Multimedianachricht einer gewählten Preisklasse wie z.B. P1-P5 in Figur 2 (rechte Seite, GTM) des jeweils vorgegebenen Tarifsystems zugeordnet. Zweckmäßigerweise wird das noch freie Nutzdatenvolumen wie z.B. FVOL der jeweiligen Multimedianachricht gegenüber der jeweilig gewählten Nutzdatenvolumen-Obergrenze (wie z.B. SGx) und/oder gegenüber einer mit einem bestimmten Nutzdatenvolumen in Verbindung stehenden bzw. verknüpften Preis-Obergrenze (wie z.B. SPx) ermittelt. Vorteilhaft kann es insbesondere sein, dass das noch freie Nutzdatenvolumen FVOL der Multimedianachricht ermittelt wird, das der Preisklasse des vorhandenen, belegten Nutzdatenvolumens der Multimedianachricht aufgrund des Tarifsystems zugeordnet ist. In vorteilhafter Weise kann ggf. das noch freie Nutzdatenvolumen FVOL teilweise oder ganz durch weitere Nutzdaten oder zusätzliche Informationen ausgefüllt werden. Bei einer etwaigen Überschreitung der einer gewählten Preisklasse wie z.B. P2 zugeordneten Nutzdatenvolumen-Obergrenze SGx wird zweckmäßigerweise mindestens eine Reduzierungsapplikation zur Reduzierung des Nutzdatenvolumens VOL der jeweiligen Multimedianachricht bereitgestellt. Zweckmäßig kann es insbesondere sein, dass auf eventuelle Überschreitungen von benutzerdefinierten Preis- und/oder Nutzdatenvolumen- Obergrenzen SGx, SPx aufmerksam gemacht wird.

Vorteilhaft ist insbesondere eine Schrittabfolge, bei der
a) das Nutzdatenvolumen VOL der jeweilig zu versendenden oder zu empfangenden Multimedianachricht ermittelt wird,
b) das ermittelte Nutzdatenvolumen VOL einer Preis-Klasse wie z.B. P1-P5 aufgrund eines vorgegebenen Tarifsystems zugeordnet wird,
c) das noch freie Nutzdatenvolumen FVOL für die aktuelle Preis-Klasse wie z.B. P2 ermittelt wird,
d) auf eventuelle Überschreitungen von benutzerdefinierten (Preis- und/oder Nutzdatenvolumen-) Obergrenzen wie z.B. SPx, SGx aufmerksam gemacht wird,
e) die Ergebnisse der Ermittlung nach a), und/oder der Zuordnung nach b), und/oder der Berechnung nach c), und/oder der eventuellen Überschreitung nach d) einem Benutzer in akustischer, taktiler oder graphischer Form angezeigt wird,
f) dem Benutzer mindestens ein Vorschlag zur Reduktion des Nutzdatenvolumens vorrangig mit dem Ziel unterbreitet wird, die Multimedianachricht einer niedrigeren Preis-Kategorie zugehörig zu machen, und
g) eine Reduktion des Nutzdatenvolumens nach Bestätigung durch den Benutzer oder automatisch derart ausgeführt wird, dass die aufbereitete Multimedianachricht einer niedrigeren Preis-Kategorie zugehörig gemacht ist.

Vorzugsweise werden die verschiedenen Varianten des erfindungsgemäßen Verfahrens direkt in (mindestens) einem MMS User Agent ausgeführt. Alternativ hierzu können die Verfahrensschritte oder eine Teilmenge davon auch von mindestens einer eigenständigen, vom MMS User Agent unabhängigen Funktionseinheit durchgeführt werden. Dazu kann es zweckmäßig sein, dass der eigenständigen Funktionseinheit vom jeweiligen MMS User Agent das von diesem ermittelte Nutzdatenvolumen VOL der jeweilig zu übertragenden oder zu empfangenden Multimedianachricht oder die ganz oder teilweise fertig zusammengestellte Multimedianachricht zur Verfügung gestellt wird. Ggf. kann es zweckmäßig sein, dass entweder der jeweilige MMS User Agent und/oder die mindestens eine eigenständige Funktionseinheit Zugriff auf bestimmte Informationen hat, insbesondere auf Daten in tabellarischer Form, um das ermittelte Nutzdatenvolumen VOL einer Preis-Klasse wie z.B. P1-P5 zuordnen zu können, oder auf vom Benutzer gesetzte Preis- und/oder Nutzdatenvolumen- Obergrenzen wie z.B. SPx, SGx, um auf eventuelle Überschreitungen hinweisen zu können. Derartige Informationen können vorzugsweise in internen Speicherbereichen eines Endgerätes, insbesondere Funkkommunikationsgeräts, abgelegt werden. Zusätzlich oder alternativ hierzu können derartige Informationen in externen Speichereinheiten abgelegt werden, die mit einem Endgerät über Kabel und/oder drahtlos verbunden werden können. Bei der externen Speichereinheit wird in vorteilhafter Weise eine SIM-Karte oder eine UICC mit (U)SIM verwendet, die in ein mobiles Endgerät gesteckt werden kann.

Zweckmäßigerweise werden Speicherbereiche, die ausschließlich vom Netzbetreiber beschrieben bzw. aktualisiert werden können, für das Speichern und nachträgliche OTA-Aktualisieren der individuellen MMS- Tarifinformationen verwendet. Speicherbereiche, für die auch der jeweilige Benutzer Schreib- und Leserechte besitzt, können vorteilhaft für das Speichern der benutzerdefinierten Preis- und/oder Nutzdatenvolumen- Obergrenzen verwendet werden.

Als ausführende Funktionseinheit kann insbesondere eine Reduzierungs- Applikation auf einer SIM-Karte (SAT Applikation) oder auf einer UICC mit (U)SIM (CAT bzw. (U)SAT Applikation) verwendet werden.

Eine Ausgabemeldung zur Anzeige einer etwaigen Überschreitung einer Nutzdatenvolumen-Obergrenze SGx und/oder Preisklassen-Oberfläche SPx wird einem Benutzer über mindestens ein HMI ("human machine interface") vorzugsweise in akustischer, taktiler, oder graphischer Form mitgeteilt. Zur optischen Ausgabe der Ergebnisse bzw. Vergleiche eignet sich insbesondere eine Balkengraphik.

Zum Reduzieren des Nutzdatenvolumens einer Multimedianachricht kann insbesondere eine Datei-Typ Konvertierung, eine Datei-Format Konvertierung, eine Kompressionstechnik (= Teilmenge der Datei-Format Konvertierung), und/oder bei Standbildern eine Reduzierung der Farbtiefe, und/oder der Größe auf mindestens ein Multimedianachrichten-Element der jeweilig zu versendenden oder zu empfangenden Multimedianachricht angewendet werden. Zweckmäßigerweise werden mindestens zwei Möglichkeiten zur Reduzierung des Nutzdatenvolumens eines Multimedianachrichten-Elementes miteinander kombiniert, insbesondere nacheinander, ausgeführt.

Das Nutzdatenvolumen VOL einer Multimedianachricht kann vorzugsweise durch das Aufsummieren aller Datenvolumina der einzelnen Multimedianachrichten-Elemente der Multimedianachricht ermittelt werden. Ggf. kann zusätzlich teilweise oder ganz mindestens ein etwaig im Kopfteil der Multimedianachricht vorhandenes Kopffeld, insbesondere die Größen der Kopf-Felder "subject" für das Thema der Multimedianachricht, sowie "Cc" und "Bcc" zur Adressierung der Multimedianachricht, bei der Berechnung des Nutzdatenvolumens berücksichtig werden. Ggf. kann auch in der Multimedianachricht enthaltene Präsentationsbeschreibungen teilweise oder ganz bei der Berechnung des Nutzdatenvolumens mit aufgenommen werden.

Vorstehend wurde insbesondere auf folgende einschlägige Literatur Bezug genommen:
[1] 3GPP TS 23.040 version 5.2.0, Release 5; Third Generation Partnership Project; Technical Specification Group Terminals;Technical realization of the Short Message Service (SMS).
[2] 3GPP TS 22.140 version 4.1.0, Release 4; Third Generation Partnership Project; Technical Specification Group Services and System Aspects; Service Aspects; Stage 1; Multimedia Messaging Service (MMS).
[3] 3GPP TS 23.140 version 5.1.0, Release 5; Third Generation Partnership Project; Technical Specification Group Terminals; Multimedia Messaging Service (MMS); Functional Description; Stage 2.
[4] W3C Recommendation 15-June-1998: "Synchronized Multimedia Integration Language (SMIL) 1.0 Specification" - http://www.w3.org/TR/REC-smil/.

## Patentansprüche

1. Verfahren zur übertragungseffizienten Aufbereitung von Multimedianachrichten vor ihrem Versenden oder ihrem Empfangen, wobei
a) vor, nach, und/oder während des Zusammenstellens der jeweilig zu versendenden oder zu empfangenden Multimedianachricht (MM) das vorhandene, belegte Nutzdatenvolumen (VOL) dieser Multimedianachricht (MM) ermittelt wird,
b) das ursprünglich vorhandene, belegte Nutzdatenvolumen (VOL) der jeweilig zu versendenden oder zu empfangenden Multimedianachricht (MM) einer Preisklasse (Px) eines nutzdatenvolumen-gestaffelten Tarifierungssystems (GTM) zugeordnet wird,
c) bei einer etwaigen Überschreitung einer vorgebbaren Preis- und/oder Nutzdatenvolumen-Obergrenze (SPx, SGx) für die jeweilig zu versendende oder zu empfangende Multimedianachricht (MM) mindestens eine Reduzierungsapplikation für die Reduzierung des ursprünglich vorhandenen, belegten Nutzdatenvolumens (VOL) der jeweilig zu versendenden oder zu empfangenden Multimedianachricht (MM) bereitgestellt wird, um die jeweilig zu versendende oder zu empfangende Multimedianachricht (MM) einer niedrigeren Preisklasse (Px) des nutzdatenvolumen-gestaffelten Tarifierungssystems (GTM) zugehörig zu machen.

2. Verfahren nach Anspruch 1,
**dadurch gekennzeichnet,**
**dass** das noch freie Nutzdatenvolumen (FVOL) für die jeweilig zu versendende oder zu empfangende Multimedianachricht (MM) gegenüber der jeweilig gewählten Nutzdatenvolumen- Obergrenze (SGx) ermittelt wird.

3. Verfahren nach Anspruch 2,
**dadurch gekennzeichnet,**
**dass** das noch freie Nutzdatenvolumen (FVOL)der jeweilig zu versendenden oder zu empfangenden Multimedianachricht (MM) teilweise oder ganz durch Nutzdaten in Form mindestens eines zusätzlichen Multimedia-Nachrichtenelements, -
Nachrichtenteilelements, oder anderer zusätzlicher Informationen ausgefüllt wird.

4. Verfahren nach einem der vorhergehenden Ansprüche,
**dadurch gekennzeichnet,**
**dass** das noch freie Nutzdatenvolumen (FVOL) der jeweilig zu versendenden oder zu empfangenden Multimedianachricht (MM) für deren aktuell zugeordnete Preisklasse (Px) ermittelt wird.

5. Verfahren nach einem der vorhergehenden Ansprüche,
**dadurch gekennzeichnet,**
**dass** bei einer etwaigen Überschreitung der gewählten Preis-obergrenze (SPx) oder gewählten Nutzdatenvolumen-Obergrenze (SGx) für die jeweilige zu versendende oder zu empfangende Multimedianachricht (MM) mindestens eine Reduzierungsapplikation für die Reduzierung des vorhandenen Nutzdatenvolumens (VOL) der jeweilig abzusendenden oder zu empfangenden Multimedianachricht (MM) bereitgestellt wird, und dass diese Reduzierungsapplikation auf die jeweilig zu versendenden oder zu empfangenden Multimedianachricht (MM) angewandt wird.

6. Verfahren nach einem der vorhergehenden Ansprüche,
**dadurch gekennzeichnet,**
**dass** auf eventuelle Überschreitungen von zuvor definierten Preis- und/oder Nutzdatenvolumen- Obergrenzen (SPx, SGx) aufmerksam gemacht wird.

7. Verfahren nach einem der vorhergehenden Ansprüche,
**dadurch gekennzeichnet,**
**dass** die Preis- und/oder Nutzdatenvolumen- Obergrenzen (SPx, SGx) entweder vom jeweiligen Benutzer und/oder MMS (multimedia messaging service) Dienstleistunganbieter (PA, PB) definiert werden.

8. Verfahren nach einem der vorhergehenden Ansprüche,
**dadurch gekennzeichnet,**
**dass**
a) das aktuell vorhandene Nutzdatenvolumen (VOL) der jeweilig zu versendenden oder zu empfangenden Multimedianachricht (MM) ermittelt wird, dass
b) das ermittelte Nutzdatenvolumen (VOL) einer Preisklasse (P1-P5) zugeordnet wird, dass
c) das noch freie Nutzdatenvolumen (FVOL) für die mit dem ermittelten Nutzdatenvolumen (VOL) korrespondierende Preisklasse (Px) ermittelt wird, dass
d) eventuelle Überschreitungen von definierten Preis-und/oder Nutzdatenvolumen- Obergrenzen (SPx, SGx) ermittelt werden und darauf aufmerksam gemacht wird, dass
e) die Ergebnisse der Ermittlung nach a), und/oder der Zuordnung nach b), und/oder der Berechnung nach c), und/oder der eventuellen Überschreitung nach d) einem Benutzer in akustischer, taktiler oder graphischer Form angezeigt werden, dass
f) dem Benutzer mindestens ein Vorschlag zur Reduktion des vorhandenen Nutzdatenvolumens vorrangig mit dem Ziel unterbreitet wird, die jeweilig zu versendenden oder zu empfangenden Multimedianachricht (MM) einer niedrigeren Preisklasse (Px) als die ursprünglich zugeordnete Preisklasse zugehörig zu machen, und dass
g) eine Reduktion des ursprünglich belegten Nutzdatenvolumens der jeweilig zu versendenden oder zu empfangenden Multimedianachricht (MM) derart ausgeführt wird, dass die aufbereitete Multimedianachricht (MM) einer niedrigeren Preisklasse als ihre ursprünglich zugeordnete Preisklasse zugehörig gemacht ist.

9. Verfahren nach einem der vorhergehenden Ansprüche **ge-kennzeichnet durch** die direkte Ausführung deren Verfahrensschritte oder einer Teilmenge hiervon in einem MMS User Agent.

10. Verfahren nach einem der Ansprüche 1 mit 8, **gekennzeichnet durch** die Ausführung deren Verfahrensschritte oder einer Teilmenge hiervon in mindestens einer eigenständigen, von einem MMS User Agent unabhängigen Funktionseinheit.

11. Verfahren nach Anspruch 10,
**dadurch gekennzeichnet,**
**dass** der eigenständigen Funktionseinheit vom MMS User Agent das von diesem ermittelte Nutzdatenvolumen (VOL) der jeweilig zu übertragenden oder zu empfangenden Multimedianachricht (MM) oder die ganz oder teilweise fertig zusammengestellte Multimedianachricht selbst zur Verfügung gestellt wird.

12. Verfahren nach einem der Ansprüche 9 mit 11,
**dadurch gekennzeichnet,**
**dass** entweder vom jeweiligen MMS User Agent und/oder von der mindestens einen eigenständigen Funktionseinheit Zugriff auf Informationen zum Zuordnen des ermittelten Nutzdatenvolumens (VOL) der jeweilig zu versendenden oder zu empfangenden Multimedianachricht (MM) zu einer Preisklasse (Px), und/oder Zugriff auf die vom jeweiligen Benutzer oder MMS Dienstleistungsanbieter gesetzten Preis- und/oder Nutzdatenvolumen- Obergrenzen (SPx, SGx) zum Hinweis auf eventuelle Überschreitungen genommen wird.

13. Verfahren nach Anspruch 12,
**dadurch gekennzeichnet,**
**dass** derartige Informationen in einem oder mehreren internen Speicherbereichen eines Endgerätes abgelegt werden.

14. Verfahren nach Anspruch 12,
**dadurch gekennzeichnet,**
**dass** derartige Informationen in einem oder mehreren externen Speichereinheiten abgelegt werden, die mit dem jeweiligen Endgerät über Kabel und/oder drahtlos verbunden werden können.

15. Verfahren nach Anspruch 14,
**dadurch gekennzeichnet ,**
**dass** als externe Speichereinheit eine SIM-Karte oder eine UICC mit SIM oder USIM verwendet wird, die in ein mobiles Endgerät einsteckbar ist.

16. Verfahren nach einem der Ansprüche 13 mit 15,
**dadurch gekennzeichnet,**
**dass** Speicherbereiche der jeweiligen Speichereinheit, die ausschließlich vom Netzbetreiber beschrieben bzw. aktualisiert werden können, zum Speichern und nachträgliches OTA-Aktualisieren individueller MMS- Tarifinformationen verwendet werden.

17. Verfahren nach Anspruch 16,
**dadurch gekennzeichnet,**
**dass** die MMS-Tarifinformationen des jeweiligen Netzbetreibers für die Preis-und/oder Nutzdatenvolumen-Obergrenzen (SPx, SGx) herangezogen werden.

18. Verfahren nach einem der Ansprüche 13 mit 15,
**dadurch gekennzeichnet,**
**dass** Speicherbereiche der jeweiligen Speichereinheit, für die auch der jeweilige Benutzer Schreib- und Leserechte besitzt, für das Speichern der benutzerdefinierten Preis- und/oder Nutzdatenvolumen- Obergrenzen (SPx, SGx) verwendet werden.

19. Verfahren nach Anspruch 10,
**dadurch gekennzeichnet,**
**dass** die Ausführung der Verfahrensschritte oder einer Teilmenge hiervon durch mindestens eine Reduzierungs-Applikation auf einer SIM-Karte (SAT Applikation) oder auf einer UICC mit SIM oder USIM durchgeführt wird.

20. Verfahren nach einem der vorhergehenden Ansprüche,
**dadurch gekennzeichnet,**
**dass** eine Ausgabemeldung zur Anzeige einer etwaigen Überschreitung einer Nutzdatenvolumen-Obergrenze (SGx) und/oder Preisklassen-Obergrenze (SPx) über mindestens eine HMI (human machine interface)- Einheit in akustischer, taktiler, und/oder graphischer Form einem Benutzer mitgeteilt wird.

21. Verfahren nach Anspruch 20,
**dadurch gekennzeichnet,**
**dass** für die optische Ausgabe eine Balkengraphik (BK) verwendet wird.

22. Verfahren nach Anspruch 21,
**dadurch gekennzeichnet,**
**dass** mit Hilfe der Balkengraphik (BK) das aktuell vorhandene Nutzdatenvolumen (VOL) der jeweilig zu versendenden oder zu empfangenden Multimedianachricht (MM) in Bezug zu zugeordneten Preis-Klassen (P1-P5) angezeigt wird.

23. Verfahren nach einem der vorhergehenden Ansprüche,
**dadurch gekennzeichnet,**
**dass** zum Reduzieren des vorhandenen Nutzdatenvolumens eines Multimedianachrichten-Elementes der jeweilig zu versendenden oder zu empfangenden Multimedianachricht (MM) eine Dateityp-Konvertierung, eine Dateiformat-Konvertierung, und/öder bei Standbildern eine Reduzierung der Farbtiefe, und/oder der Größe zum Einsatz kommt.

24. Verfahren nach Anspruch 23,
**dadurch gekennzeichnet,**
**dass** mindestens zwei Möglichkeiten zur Reduzierung des Nutzdatenvolumens eines Multimedianachrichten-Elementes miteinander kombiniert ausgeführt werden.

25. Verfahren nach einem der vorhergehenden Ansprüche,
**dadurch gekennzeichnet,**
**dass** das vorhandene Nutzdatenvolumen (VOL) der jeweilig zu versendenden oder zu empfangenden Multimedianachricht (MM) durch das Aufsummieren aller Datenvolumina der einzelnen Multimedianachrichten-Elemente dieser Multimedianachricht ermittelt wird.

26. Verfahren nach Anspruch 25,
**dadurch gekennzeichnet,**
**dass** zusätzlich teilweise oder ganz mindestens ein oder mehrere, etwaig im Kopf-Teil der jeweilig zu versendenden oder zu empfangenden Multimedianachricht vorhandene Kopf-Felder, insbesondere die Größen der Kopf-Felder "subject" für das Thema der Multimedianachricht sowie "Cc" und "Bcc" zur Adressierung der Multimedianachricht, bei der Berechnung des Nutzdatenvolumens dieser Multimedianachricht berücksichtig werden.

27. Verfahren nach einem der Ansprüche 25 oder 26,
**dadurch gekennzeichnet,**
**dass** zusätzlich teilweise oder ganz in der jeweilig zu versendenden oder zu empfangenden Multimedianachricht (MM) enthaltene Präsentationsbeschreibungen bei der Berechnung des Nutzdatenvolumens berücksichtigt werden.

28. Funkkommunikationsgerät
das zur Durchführung des Verfahrens nach einem der vorhergehenden Ansprüche ausgebildet ist.

## Claims

1. Method for the transmission-efficient editing of multimedia messages before they are sent or received, wherein
a) before, after and/or during the composition of the multimedia message (MM) to be sent or received in a particular case, the present, used user data volume (VOL) of said multimedia message (MM) is determined,
b) the originally present, used user data volume (VOL) of the multimedia message (MM) to be sent or received in a particular case is assigned to a price class (Px) of a tariffing system (GTM) graded according to user data volume,
c) if a predefinable price and/or user data volume upper limit (SPx, SGx) is exceeded for the multimedia message (MM) which is to be sent or received in a particular case, at least one reduction application is provided to reduce the originally present, used user data volume (VOL) of the multimedia message (MM) which is to be sent or received in the particular case in order to make the multimedia message (MM) which is to be sent or received in the particular case belong to a lower price class (Px) of the tariffing system (GTM) graded according to user data volume.

2. Method according to claim 1,
**characterised in that**
the still available user data volume (FVOL) for the multimedia message (MM) which is to be sent or received in a particular case is determined compared to the selected user data volume upper limit (SGx) in a particular case.

3. Method according to claim 2,
**characterised in that**
the still available user data volume (FVOL) of the multimedia message (MM) which is to be sent or received in a particular case is partially or completely filled by user data in the form of at least one additional multimedia message element, message sub-element or other additional information.

4. Method according to one of the preceding claims,
**characterised in that**
the still available user data volume (FVOL) of the multimedia message (MM) which is to be sent or received in a particular case is determined for its currently assigned price class (Px).

5. Method according to one of the preceding claims,
**characterised in that**
in the event of the chosen price upper limit (SPx) or chosen user data volume upper limit (SGx) for the multimedia message (MM) which is to be sent or received in a particular case being exceeded, at least one reduction application is provided to reduce the existing user data volume (VOL) of the multimedia message (MM) to be sent or received in a particular case, and that this reduction application is applied to the respective multimedia message (MM) which is to be sent or received in a particular case.

6. Method according to one of the preceding claims,
**characterised in that**
attention is drawn to possible overshoots of previously defined price and/or user data volume upper limits (SPx, SGx).

7. Method according to one of the preceding claims,
**characterised in that**
the price and/or user data volume upper limits (SPx, SGx) are defined either by the respective user and/or MMS (Multimedia Messaging Service) service provider (PA, PB).

8. Method according to one of the preceding claims,
**characterised in that**
a) the currently present user data volume (VOL) of the multimedia message (MM) to be sent or received in a particular case is determined,
b) the determined user data volume (VOL) is assigned to a price class (P1-P5),
c) the user data volume (FVOL) still available for the price class (Px) corresponding to the determined user data volume (VOL) is determined,
d) possible overshoots of defined price and/or user data volume upper limits (SPx, SGx) are determined and attention is drawn to the fact that
e) the results of the determining step a) and/or of the assignment step b) and/or of the calculation step c) and/or of the possible upper limit overshoot according to step d) are indicated to a user in acoustic, tactile or graphical form,
f) the user is presented with at least one suggestion for reducing the present user data volume, primarily with the aim of making the multimedia message (MM) which is to be sent or received in a particular case belong to a lower price class (Px) than the originally assigned price class, and
g) a reduction of the originally used user data volume of the multimedia message (MM) which is to be sent or received in a particular case is carried out in such a way that the edited multimedia message (MM) is made to belong to a lower price class than its originally assigned price class.

9. Method according to one of the preceding claims, **characterised in that** its method steps or a subset thereof are performed directly in an MMS user agent.

10. Method according to one of the claims 1 to 8, **characterised in that** its method steps or a subset thereof are performed in at least one autonomous functional unit that is independent of an MMS user agent.

11. Method according to claim 10,
**characterised in that**
the autonomous functional unit is provided by the MMS user agent with the user data volume (VOL) of the multimedia message (MM) to be sent or received in a particular case, said user data volume being determined by said MMS user agent, or with the fully or partially composed multimedia message itself.

12. Method according to one of the claims 9 to 11,
**characterised in that**
either the respective MMS user agent and/or the at least one autonomous functional unit has access to information for assigning the determined user data volume (VOL) of the multimedia message (MM) to be sent or received in a particular case to a price class (Px) and/or access to the price and/or user data volume upper limits (SPx, SGx) set by the respective user or MMS service provider in order to draw attention to possible overshoots.

13. Method according to claim 12,
**characterised in that**
information of said kind is stored in one or more internal memory areas of a terminal device.

14. Method according to claim 13,
**characterised in that**
information of said kind is stored in one or more external memory units which can be connected to the respective terminal device via cable and/or wirelessly.

15. Method according to claim 14,
**characterised in that**
the external memory unit is a SIM card or a UICC with SIM or USIM which can be inserted into a mobile terminal device.

16. Method according to one of the claims 13 to 15,
**characterised in that**
memory areas of the respective memory unit which can be written or, as the case may be, updated solely by the network carrier are used for the storing and subsequent OTA updating of individual items of MMS tariff information.

17. Method according to claim 16,
**characterised in that**
the MMS tariff information of the respective network carrier is referred to in order to set the price and/or user data volume upper limits (SPx, SGx).

18. Method according to one of the claims 13 to 15,
**characterised in that**
memory areas of the respective memory unit for which the respective user also possesses read and write permissions are used for storing the user-defined price and/or user data volume upper limits (SPx, SGx).

19. Method according to claim 10,
**characterised in that**
the method steps or a subset thereof are performed by at least one reduction application on a SIM card (SAT application) or on a UICC with SIM or USIM.

20. Method according to one of the preceding claims,
**characterised in that**
an output message for indicating a possible overshoot of a user data volume upper limit (SGx) and/or price class upper limit (SPx) is communicated to a user via at least one HMI (Human Machine Interface) unit in acoustic, tactile and/or graphical form.

21. Method according to claim 20,
**characterised in that**
a bar chart (BK) is used for the optical output.

22. Method according to claim 21,
**characterised in that**
the currently present user data volume (VOL) of the multimedia message (MM) which is to be sent or received in a particular case is indicated in relation to assigned price classes (P1-P5) with the aid of the bar chart (BK).

23. Method according to one of the preceding claims,
**characterised in that**
in order to reduce the present user data volume of a multimedia message element of the multimedia message (MM) which is to be sent or received in a particular case, a file type conversion, a file format conversion and/or, in the case of still images, a reduction of the colour depth and/or the size is used.

24. Method according to claim 23,
**characterised in that**
at least two ways of reducing the user data volume of a multimedia message element are performed in combination with each other.

25. Method according to one of the preceding claims,
**characterised in that**
the present user data volume (VOL) of the multimedia message (MM) which is to be sent or received in a particular case is determined by the totalling of all data volumes of the individual multimedia message elements of said multimedia message.

26. Method according to claim 25,
**characterised in that**
in addition, at least one or more header fields possibly present in the header part of the multimedia message (MM) which is to be sent or received in a particular case, in particular the sizes of the header fields "Subject" for the subject of the multimedia message, as well as "Cc" and "Bcc" for the addressing of the multimedia message, are partially or completely included in the calculation of the user data volume of said multimedia message.

27. Method according to one of the claim 25 or 26,
**characterised in that**
in addition, presentation descriptions contained in the multimedia message (MM) which is to be sent or received in a particular case are also included partially or completely in the calculation of the user data volume.

28. Radio communication device
which is embodied for performing the method according to one of the preceding claims.

## Revendications

1. Procédé pour préparer des messages multimédia de manière efficace avant leur envoi ou leur réception,
a) le volume de données utiles (VOL) existant, occupé de ce message multimédia (MM) étant calculé avant, après, et/ou pendant la composition du message multimédia (MM) respectivement à envoyer ou à recevoir,
b) le volume de données utiles (VOL) occupé, existant à l'origine du message multimédia (MM) à envoyer ou à recevoir respectivement étant affecté à une catégorie de prix (Px) d'un système de tarification (GTM) échelonné selon le volume de données utiles,
c) au moins une application réductrice pour la réduction du volume de données utiles (VOL) occupé, existant à l'origine du message multimédia (MM) à envoyer ou à recevoir respectivement étant mise à disposition en cas d'un éventuel dépassement d'un prix plafond et/ou d'un plafond de volume de données utiles (SPx, SGx) programmable pour le message multimédia (MM) respectivement à envoyer ou à recevoir, afin d'affecter le message multimédia (MM) à envoyer ou à recevoir respectivement à une catégorie de prix (Px) inférieure du système de tarification (GTM) échelonné selon le volume de données utiles.

2. Procédé selon la revendication 1, **caractérisé en ce que** le volume de données utiles (FVOL)encore libre pour le message multimédia (MM) à envoyer ou à recevoir respectivement est calculé par rapport au plafond de volumes de données utiles (SGx) choisi respectivement.

3. Procédé selon la revendication 2, **caractérisé en ce que** le volume de données utiles (FVOL)encore libre pour le message multimédia (MM) à envoyer ou à recevoir respectivement est rempli en tout ou partie par des données utiles sous forme d'au moins un élément de message multimédia supplémentaire, d'un élément partiel d'information, ou par d'autres informations supplémentaires.

4. Procédé selon l'une des revendications précédentes, **caractérisé en ce que** le volume de données utiles (FVOL)encore libre pour le message multimédia (MM) à envoyer ou à recevoir respectivement est calculé pour la catégorie de prix (Px) actuelle qui lui a été attribuée.

5. Procédé selon l'une des revendications précédentes, **caractérisé en ce que** en cas de dépassement éventuel du plafond de prix (SPx) choisi ou du plafond de volumes de données utiles choisi (SGx) pour le message multimédia (MM) à envoyer ou à recevoir respectivement au moins une application réductrice pour la réduction du volume de données utiles (VOL) existant du message multimédia (MM) à envoyer ou à recevoir respectivement est mise à disposition, et **en ce que** cette application réductrice est appliquée au message multimédia (MM) à envoyer ou à recevoir respectivement.

6. Procédé selon l'une des revendications précédentes, **caractérisé en ce que** l'attention est attirée sur d'éventuels dépassements de plafonds de prix et/ou de plafonds de volumes de données utiles (SPx, SGx) définis au préalable.

7. Procédé selon l'une des revendications précédentes, **caractérisé en ce que** les prix plafonds et/ou les plafonds de volumes de données utiles (SPx, SGx) sont définis soit par l'utilisateur respectif et/ou soit par le prestataire (PA, PB) du service de messagerie multimédia MMS.

8. Procédé selon l'une des revendications précédentes,
**caractérisé en ce que**
a) le volume de données utiles (VOL) existant actuel du message multimédia (MM) à envoyer ou à recevoir est calculé, **en ce que**
b) le volume de données utiles (VOL) calculé est attribué à une catégorie de prix (P1-P5), **en ce que**
c) le volume de données utiles (FVOL) encore libre est calculé pour la catégorie de prix (Px) correspondant au volume de données utiles (VOL) calculé, **en ce que**
d) d'éventuels dépassements de prix plafonds et/ou de plafonds de volumes de données utiles (SPx, SGx) définis sont calculés et **en ce que** l'attention est attirée dessus, **en ce que**
e) des résultats du calcul selon a), et/ou de l'affectation selon b), et/ou du calcul selon c), et/ou du déplacement éventuel selon d) sont indiqués à un utilisateur sous forme acoustique, tactile ou graphique, **en ce que**
f) au moins une proposition de réduction du volume de données utiles existant est soumise à l'utilisateur dans le but d'affecter le message multimédia (MM) à envoyer ou à recevoir respectivement à une catégorie de prix (Px) inférieure à la catégorie de prix attribuée à l'origine, et **en ce que**
g) une réduction du volume de données utiles occupé à l'origine du message multimédia (MM) à envoyer ou à recevoir respectivement est exécutée de sorte que le message multimédia (MM) traité soit attribué à une catégorie de prix inférieure à la catégorie qui lui a été attribuée à l'origine.

9. Procédé selon l'une des revendications précédentes, **caractérisé par** l'exécution directe de ces étapes ou d'une partie de celles-ci dans un agent utilisateur MMS (MMS User Agent).

10. Procédé selon l'une des revendications 1 à 8, **caractérisé par** l'exécution de ces étapes ou d'une partie de celles-ci dans au moins une unité fonctionnelle autonome indépendante d'un agent utilisateur MMS.

11. Procédé selon la revendication 10, **caractérisé en ce que** le volume de données utiles (VOL) calculé par l'agent utilisateur MMS du message multimédia (MM) à transmettre ou à recevoir respectivement ou le message multimédia proprement dit terminé d'être composé en tout ou partie sont mis à la disposition de l'unité fonctionnelle autonome par l'agent utilisateur MMS.

12. Procédé selon l'une des revendications 9 à 11, **caractérisé en ce que** soit l'agent utilisateur MMS respectif et/ou l'au moins une unité fonctionnelle autonome prend accès à des informations pour l'affectation du volume de données utiles (VOL) calculé du message multimédia (MM) à envoyer ou à recevoir respectivement à une catégorie de prix (Px), et/ou accès aux prix plafonds et/ou aux plafonds de volumes de données utiles (SPx, SGx) fixé par l'utilisateur respectif ou le prestataire de services MMS pour signaler d'éventuels dépassements.

13. Procédé selon la revendication 12, **caractérisé en ce que** des informations de ce type sont déposées dans une ou plusieurs zones de mémoire internes d'un terminal.

14. Procédé selon la revendication 12, **caractérisé en ce que** des informations de ce type peuvent être déposées dans une ou plusieurs unités de mémoire externes, qui peuvent être reliées par câbles et/ou sans fil au terminal correspondant.

15. Procédé selon la revendication 14, **caractérisé en ce que** une carte SIM ou une carte UICC avec SIM ou USIM est utilisée comme unité de mémoire externe, laquelle est enfichable dans un terminal mobile.

16. Procédé selon l'une des revendications 13 à 15, **caractérisé en ce que** des zones de mémoire de l'unité de mémoire respective, qui ne peuvent être inscrites et/ou actualisées que par le seul opérateur de réseau, sont utilisées pour la mémorisation et l'actualisation OTA à posteriori d'informations tarifaires MMS individuelles.

17. Procédé selon la revendication 16, **caractérisé en ce que** les informations tarifaires MMS de l'opérateur de réseau respectif sont utilisées pour les prix plafonds et/ou les plafonds de volumes de données utiles (SPx, SGx).

18. Procédé selon l'une des revendications 13 à 15, **caractérisé en ce que** des zones de mémoire de l'unité de mémoire respective, pour lesquelles l'utilisateur respectif possède des droits d'écriture et de lecture, sont utilisées pour la mémorisation des prix plafonds et/ou des plafonds de volumes de données utiles (SPx, SGx) définis par l'utilisateur.

19. Procédé selon la revendication 10, **caractérisé en ce que** l'exécution des étapes ou d'une partie de celles-ci est effectuée par au moins une application réductrice sur une carte SIM (application SAT) ou sur une carte UICC avec SIM ou USIM.

20. Procédé selon l'une des revendications précédentes, **caractérisé en ce que** un message d'émission est communiqué sous forme acoustique, tactile, et/ou graphique à un utilisateur pour l'affichage d'un dépassement éventuel d'un plafond de volumes de données utiles (SGx) et/ou d'un plafond de catégorie de prix (SPx) via au moins une unité à interface homme-machine HMI.

21. Procédé selon la revendication 20, **caractérisé en ce que** un graphique à barres (BK) est utilisé pour la signalisation optique.

22. Procédé selon la revendication 21, **caractérisé en ce que** à l'aide du graphique à barres (BK), le volume de données utiles (VOL) existant actuel du message multimédia (MM) à envoyer ou à recevoir respectivement est affiché en rapport aux catégories de prix (P1-P5) attribuées.

23. Procédé selon l'une des revendications précédentes, **caractérisé en ce que** une conversion de type de fichier, une conversion de format de fichier, et/ou avec des images fixes une réduction de l'intensité de la couleur, et/ou de la taille sont utilisées pour réduire le volume de données utiles existant d'un élément du message multimédia du message multimédia (MM) à envoyer ou à recevoir respectivement.

24. Procédé selon la revendication 23, **caractérisé en ce que** au moins deux possibilités de réduction du volume de données utiles d'un élément du message multimédia sont exécutées en combinaison.

25. Procédé selon l'une des revendications précédentes, **caractérisé en ce que** le volume de données utiles (VOL) existant du message multimédia (MM) à envoyer ou à recevoir est calculé en additionnant tous les volumes de données des éléments individuels de messages multimédia de ce message multimédia.

26. Procédé selon la revendication 25, **caractérisé en ce que** en sus, en partie ou en totalité au moins un ou plusieurs champs d'en-tête existants par exemple dans la partie d'entête du message multimédia à envoyer ou à recevoir respectivement, en particulier les grandeurs des champs d'entête "subject" pour le sujet du message multimédia ainsi que "Cc" et "Bcc" pour l'adressage du message multimédia, sont pris en compte pour le calcul du volume de données utiles de ce message multimédia.

27. Procédé selon l'une des revendications 25 ou 26, **caractérisé en ce que** les descriptions de présentations contenues partiellement ou en totalité dans le message multimédia (MM) à envoyer ou à recevoir respectivement sont en plus prises en compte pour le calcul du volume de données utiles.

28. Appareil de communication radio conçu pour l'exécution du procédé selon l'une des revendications précédentes.
